# DEMANDE DE BREVET EUROPEEN

(11) **EP 3 816 142 A1**
(43) Date de publication de la demande: **05.05.2021**
(21) Numéro de dépôt: 20201925.3
(22) Date de dépôt: 15.10.2020
(51) Int. Cl.: C05F 17/907, B65D 8/00, B65D 8/02

(54) **DISPOSITIF DE COMPOSTAGE**

(30) Priorité: 17.10.2019 FR 1911586
(71) Demandeur: Formacompost, 58130 Vaux d'Amognes (FR)
(72) Inventeur: BOUDET, Christophe, 58130 OUROUËR (FR); RAMOND, Louis, 58270 BEAUMONT-SARDOLLES (FR)
(74) Mandataire: Cabinet Laurent & Charras

(57) **Abrégé**

Ce dispositif de compostage comprend au moins un bac de compostage (1, 2) destiné à recevoir des déchets à composter, ledit bac étant monté rotatif sur un axe horizontal solidaire d'un piétement (3), et étant pourvu d'au moins une ouverture (7) obturable au moyen d'un couvercle (8), apte à permettre d'une part le remplissage dudit bac en déchets notamment organiques, et d'autre part sa vidange après compostage.

L'axe de rotation dudit bac de compostage est décentré par rapport au centre de gravité rotationnel dudit bac.

Ledit bac de compostage est constitué par l'assemblage de deux demi-coques l'une avec l'autre, symétriques l'une de l'autre, chacune des demi-coques étant elle-même constituée d'une paroi externe et d'une paroi interne réalisées en matière plastique.

## Description

### DOMAINE DE L'INVENTION

L'invention concerne un dispositif de compostage, plus particulièrement destiné à un usage domestique. Cependant, toute utilisation aux fins de compostage est envisagée, qu'elles que soient les dimensions du dispositif.

### ETAT ANTERIEUR DE LA TECHNIQUE

Le compostage est un processus biologique aérobie, donc en présence d'oxygène notamment contenu dans l'air ambiant, destiné, de manière connue, à assurer la conversion et la valorisation des matières organiques contenues dans les déchets, notamment d'origine ménagère, mais également susceptibles d'être contenus dans les sous-produits de l'élevage (la biomasse etc.), afin d'obtenir un produit stabilisé riche en composés humiques et minéraux, traditionnellement appelé le compost.

Dans le cadre de ce compostage, les déchets organiques sont dégradés en présence de l'oxygène de l'air et d'humidité, par l'action conjuguée notamment de bactéries, champignons, micro-organismes et macro-organismes. C'est une technique aujourd'hui largement usitée.

De nombreux bacs de compostage ou dispositifs équivalents existent à ce jour. Parmi ceux-ci, il n'est pas rare de trouver des bacs semblables à des poubelles classiques, mais dont l'expérience démontre que la dégradation aérobie des déchets organiques n'intervient pas correctement, de sorte qu'en lieu et place du compostage, on aboutit à des poches de méthanisation, c'est-à-dire à la genèse de gaz, typiquement du méthane, qui ne correspond pas au but recherché.

On connaît également le principe de bacs de compostage, non pas statiques, mais rotatifs, tel que par exemple décrit dans de document US 2007/327432, dont la vocation est de permettre un brassage, à périodicité plus ou moins régulière, du contenu du bac afin de favoriser l'opération proprement dite de compostage.

Ces bacs rotatifs sont soit réalisés en tôle, soit réalisés en matière plastique. L'expérience démontre que, soit ces bacs sont de volume insuffisant de sorte que la montée en température inhérente à la dégradation des déchets organiques est insuffisante, soit en raison du caractère isolant du matériau qui les constitue, l'opération de compostage n'intervient pas pendant les périodes froides ou trop chaudes (hiver et été), affectant en conséquence l'opération de compostage proprement dite.

En outre, lors de l'opération de compostage, il se forme des jus qu'il convient d'évacuer de manière périodique. Les bacs de compostage de l'art antérieur ne présentent pas en général du système de vidange de ces jus, affectant dès lors l'optimisation de l'opération de compostage.

L'objet de la présente invention vise un dispositif de compostage, surmontant ces différents inconvénients, dont la structure optimise, d'une part, les opérations de compostage proprement dites et, d'autre part, facilite son utilisation par l'opérateur, tant dans le cadre du remplissage que de la vidange du bac de compostage.

Un autre problème technique que l'on rencontre avec les dispositifs de compostage de l'art antérieur réside dans l'opération de compostage proprement dite. En effet, afin que le processus de compostage démarre d'une part, et soit maintenu d'autre part au fur et à mesure du remplissage du bac de compostage correspondant en déchets, la température à l'intérieur dudit bac joue un rôle déterminant. Ce problème est d'autant plus exacerbé que le volume offert aux déchets s'en trouve réduit, c'est-à-dire plus particulièrement pour les dispositifs de compostage à usage principalement domestique.

Ainsi, plus on réduit la taille, c'est-à-dire le volume des bacs de compostage, plus le processus de compostage proprement dit a du mal à démarrer et/ou à prospérer.

Un autre problème technique observé avec les dispositifs de compostage à usage domestique réside dans la manipulation du ou des bacs de compostage dont ils sont pourvus. Ainsi donc, il n'est pas rare d'observer avec les dispositifs de compostage de l'art antérieur des difficultés pour vidanger le bac de compostage une fois le compost réalisé.

L'objet de la présente invention est un dispositif de compostage surmontant ces différentes difficultés, et dont la structure optimise d'une part les opérations de compostage proprement dites, et d'autre part facilite son utilisation par l'opérateur, notamment pour la vidange du bac de compostage.

### EXPOSE DE L'INVENTION

Le dispositif de compostage de l'invention comprend au moins un bac de compostage destiné à recevoir les déchets à composter, ledit bac étant monté rotatif sur un axe horizontal solidaire d'un châssis. Ce bac est pourvu d'au moins une ouverture obturable, apte à permettre d'une part le remplissage dudit bac en déchets notamment organiques, et d'autre part sa vidange après compostage. L'axe de rotation dudit bac de compostage est décentré par rapport au centre de gravité rotationnel dudit bac, de telle sorte que par défaut, c'est-à-dire en l'absence de toute contrainte ou action extérieure, l'ouverture du bac est positionnée dans une zone supérieure dudit bac.

Par ailleurs et selon l'invention, le bac de compostage est constitué par l'assemblage de deux demi-coques l'une avec l'autre, symétriques l'une de l'autre, chacune des demi-coques de forme globalement cylindrique étant elle-même constituée d'une paroi externe et d'une paroi interne réalisées en matière plastique.

En d'autres termes, l'invention consiste principalement à mettre en œuvre une paroi suffisamment isotherme pour la réalisation du bac de compostage, rendant sensiblement indifférent le volume intérieur du bac ainsi constitué aux conditions environnementales extérieures, c'est-à-dire permettant à l'opération de compostage proprement dite de démarrer et de se poursuivre, quelle que soit la température externe à laquelle est soumise ledit bac, notamment dans le cadre de bacs de volume réduit.

Selon une caractéristique avantageuse de l'invention, une lame d'air d'une épaisseur typique comprise entre 1 et 2 millimètres, est ménagée entre la paroi externe et la paroi interne de chacune des demi-coques, et ce dans l'objectif d'optimiser encore le caractère isotherme du bac de compostage proprement dit.

Selon une caractéristique avantageuse de l'invention, la paroi externe est réalisée en polypropylène injecté. Encore plus avantageusement, le polypropylène en question est chargé en talc, conférant de manière connue une plus grande rigidité à la paroi ainsi obtenue).

Selon une autre caractéristique avantageuse de l'invention, la paroi interne est réalisée en polyéthylène haute densité expansé. La mise en œuvre d'un tel matériau permet d'optimiser encore davantage le caractère isotherme de la coque totale en résultant, et donc du bac de compostage. Il pourrait être envisagé cependant de remplacer le polyéthylène haute densité expansé par du polyuréthane qui présente, de manière également connue, des propriétés isothermes après expansion.

On pourrait également envisager la mise en œuvre d'une matière biosourcée, par exemple mettant en œuvre comme matériau de base du chanvre, et dont la configuration est obtenue par matriçage.

Selon l'invention, chacune des demi-coques est réalisée par emboîtage de la paroi interne dans la paroi externe, les dimensions respectives desdites parois étant bien évidemment adaptées pour permettre, en premier lieu cet emboîtage, et le cas échéant en second lieu ménager entre les deux parois respectivement interne et externe la lame d'air précitée.

Les dimensions respectives desdites parois sont sélectionnées de telle sorte qu'une fois la paroi interne emboîtée dans la paroi externe, ladite paroi interne dépasse légèrement de la paroi externe au niveau de la zone de jonction future entre les deux demi-coques définissant ainsi un rebord en saillie, d'une distance typiquement comprise entre 1 et 2 millimètres pour permettre, lors de la solidarisation des demi-coques ainsi constituées l'une avec l'autre, notamment par vissage, de produire un écrasement du rebord en saillie de la paroi interne, favorisant l'étanchéité alors du bac de compostage résultant de la solidarisation desdites demi-coques entre elles.

Avantageusement, les parois respectivement externe et interne, présentent, notamment en suite du moulage, un certain nombre de saillies radiales dirigées en direction de l'intérieur du volume qu'elles définissent, et aptes à engendrer, lors de la rotation dudit bac de compostage autour de son axe, une optimisation du mélange des différents déchets au sein dudit bac, et ainsi favoriser le processus de compostage.

Selon encore une autre caractéristique de l'invention, le dispositif de compostage de l'invention comporte un piètement muni d'une assise pour son positionnement sur le sol, d'un socle vertical duquel émerge au moins un axe horizontal sur lequel est susceptible d'être emmanché un bac de compostage conforme à l'invention, et constituant l'axe de rotation dudit bac.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.
La figure 1 est une représentation schématique en perspective d'un dispositif de compostage conforme à l'invention.
La figure 2 est une représentation schématique en perspective du dispositif de la figure 1 vue selon un autre angle.

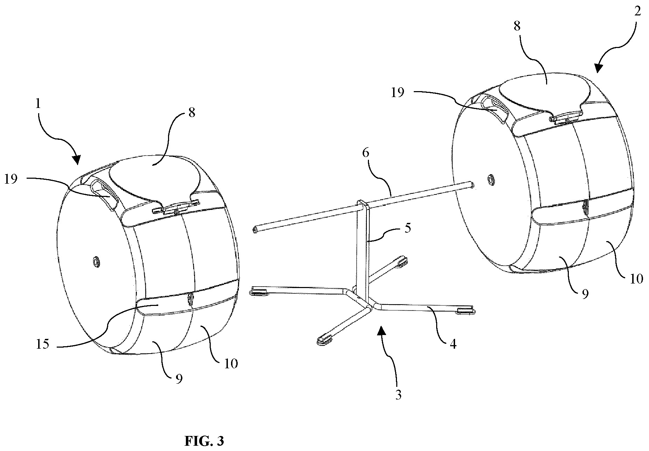

La figure 3 est une représentation schématique en éclaté du dispositif de compostage conforme à l'invention.
La figure 4 est une vue schématique en éclaté illustrant le principe de réalisation des deux demi-coques conforme à l'invention.

### DESCRIPTION DETAILLEE DE L'INVENTION

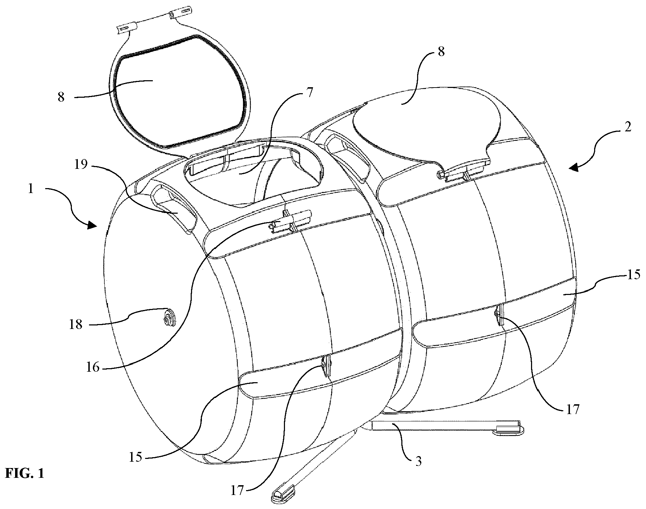

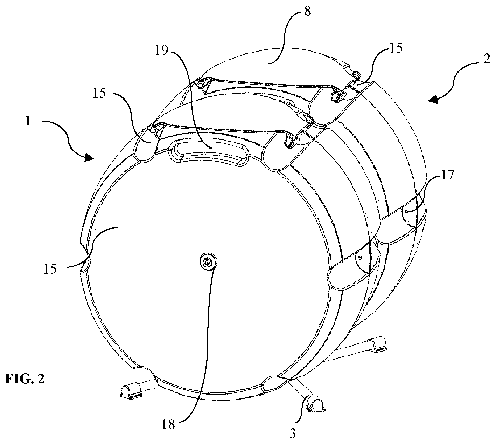

On a donc représenté notamment en relation avec les figures 1 et 2 des vues schématiques en perspective d'un dispositif de compostage conforme à l'invention. Comme déjà dit, ce dispositif a davantage vocation à être mis en œuvre pour un usage domestique.

En l'espèce, ce dispositif est constitué de deux bacs de compostage (1) et (2), strictement identiques, de forme globalement cylindrique, et en l'espèce réalisés en matière plastique et dont le détail sera décrit ultérieurement.

Ces deux bacs de de compostage sont montés sur un piétement (3), typiquement réalisé en acier, définissant une embase (4), un socle vertical (5) solidaire de l'embase (4), et un axe horizontal (6) solidaire de l'extrémité supérieure du socle vertical (5), et sur lequel sont montés rotatifs et de manière indépendante l'un de l'autre lesdits bacs de compostage (1, 2).

Selon l'invention, l'axe de rotation de chacun des deux bacs de compostage (1, 2) ne coïncide pas avec l'axe de révolution des cylindres qui les définissent. En effet, cet axe est décentré, de telle sorte que, en l'absence de toute contrainte extérieure, l'ouverture (7) ménagée au niveau de la paroi latérale de chacun des deux bacs, et que l'on peut bien observer sur la figure 1, est par simple gravité positionnée en zone supérieure.

Ainsi, dans l'exemple décrit dans lequel le volume de chacun des deux bacs (1, 2) est voisin de 60 litres, le diamètre externe desdits bacs est de l'ordre de 550 millimètres, et l'axe de rotation des bacs est décentré d'une valeur d'environ 15 millimètres.

Selon une caractéristique essentielle de l'invention, chacun des bacs de compostage (1, 2) est constitué par l'assemblage de deux demi-coques (9, 10), elles-mêmes constituées de deux parties distinctes, une paroi interne (11) et une paroi externe (12). Ces deux demi-coques (9, 10) sont symétriques l'une de l'autre par rapport à leur plan de jonction, et sont notamment obtenues de la manière suivante.

La paroi externe (12) de chacune des demi-coques (9, 10) est obtenue par injection de polypropylène, avantageusement chargé en talc (20 % en poids). Le polypropylène est connu pour sa relative rigidité, et lorsqu'en plus il est chargé en talc, cette rigidité est optimisée, caractéristique recherchée dans l'application particulière de l'invention. L'épaisseur de cette paroi externe est voisine de 3 millimètres.

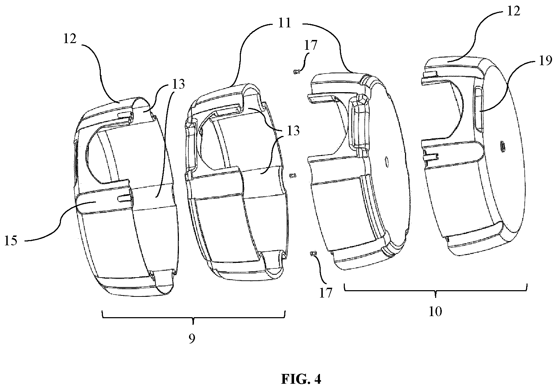

La paroi interne (11) de chacune des deux demi-coques (9, 10) est quant à elle obtenue par expansion de polyéthylène haute densité, et présente une forme similaire à la paroi externe, bien que de dimensions légèrement inférieures pour permettre l'emboîtement de la paroi interne (11) au sein de la paroi externe (12), tel qu'on peut bien l'observer par exemple sur la figure 4. Elle présente une épaisseur voisine de 16 millimètres, étant rappelé que cette paroi interne a notamment pour vocation de conférer au bac résultant de l'assemblage des demi-coques les propriétés isothermes recherchées.

Dit autrement, les deux parois respectivement externe (12) et interne (11) des demi-coques sont sensiblement identiques, encore une fois à l'emboîtage près.

On peut observer également sur la figure 4 que ces deux parois de demi-coque présentent chacune des aspérités (13) s'étendant sensiblement le long de génératrices du cylindre défini par lesdites parois, et dirigées radialement. Ces aspérités (13), en l'espèce au nombre de six périodiquement réparties sur la périphérie desdites parois, permettent d'une part d'orienter correctement l'emboitement de la paroi interne (11) dans la paroi externe (12) de la demi-coque considérée en prenant soin de faire coïncider les orifices (14) dont sont munies chacune des parois ensuite de moulage afin de définir in fine l'ouverture (7), et d'autre part de définir des saillies dirigées radialement pour favoriser le mélange des déchets introduits dans les bacs au cours de l'opération de compostage. Corollairement, ces aspérités définissent à la périphérie des bacs des zones de préhension en creux (15), permettant à l'utilisateur d'obtenir la rotation du bac sur l'axe horizontal (6) du piétement (3), et donc d'optimiser le mélange de déchets en cours de compostage contenu dans le bac en question.

Il est précisé que l'ouverture (7) précitée est obturable au moyen d'un couvercle (8), articulé sur la périphérie du bac, et susceptible de coopérer avec un moyen du type enclipsage (16), afin de permettre d'une part, la fermeture effective du bac pour permettre au processus de compostage de démarrer et de prospérer, et d'autre part, de permettre le remplissage dudit bac en déchets et corollairement, la vidange du bac en compost.

Après emboîtement de la paroi interne (11) au sein de la paroi externe (12) d'une demi-coque, il résulte une zone en saillie (non représentée) émanant de ladite paroi interne par rapport à la paroi externe, donc au niveau de la zone diamétrale. Cette zone en saillie est destinée à être écrasée lors de l'assemblage des demi-coques entre elles aux fins de la réalisation d'un bac de compostage conforme à l'invention. Cette fixation des demi-coques entre elles est assurée par vissage (17), notamment réalisé au niveau des zones de préhension (15), tel qu'on peut l'observer sur les figures 1 et 2.

Dans un objectif d'optimiser le caractère isotherme du ou des bacs de compostage de l'invention, il est possible de ménager un espace formant lame d'air entre les parois externe et interne constitutives de chacune des demi-coques (9, 10). La définition de cette lame d'air, d'une épaisseur typique de 1 millimètre, peut résulter de saillies ou d'ergots issus de moulage (non représentées) ménagées à périodicité plus ou moins régulière sur la face interne de la paroi externe, ou sur la face externe de la paroi interne, et destinés à former zone d'appui et de coopération des parois entre elles.

On conçoit tout l'intérêt du dispositif de compostage conforme à invention, notamment pour un usage domestique, en raison tout d'abord de sa facilité d'utilisation, étant en effet rappelé qu'en ôtant une bague (18), positionnée à l'extrémité de l'axe horizontal (6) après introduction du bac sur ledit axe afin de maintenir ce dernier sur l'axe en question, l'utilisateur peut retirer ledit bac hors de l'axe et procéder à sa vidange au niveau du lieu de stockage du compost alors réalisé après ouverture du couvercle (8).

La préhension du bac en question par l'utilisateur est en outre favorisée par la présence de zones de préhension (19), issues de moulage, et positionnées de part et d'autre de l'ouverture (7).

Il est en outre rappelé que si le volume typique de chacun des bacs est de 60 litres, le poids résultant du bac et du compost après obtention est voisin de 25 à 30 kg, donc facilement manipulable par un utilisateur.

On peut également souligner l'avantage procuré par la constitution particulière de chacun des bacs de compostage, qui permet tout à la fois d'obtenir le caractère isotherme de chacun des bacs, favorisant comme déjà dit l'opération de compostage proprement dite, est d'un coût de fabrication extrêmement réduit en raison des matériaux mis en œuvre, outre des techniques mises en œuvre.

## Revendications

1. Dispositif de compostage comprenant au moins un bac de compostage (1, 2) destiné à recevoir des déchets à composter, ledit au moins un bac de compostage étant monté rotatif sur un axe horizontal (6) solidaire d'un piétement (3), ledit au moins un bac étant pourvu d'au moins une ouverture (7) obturable au moyen d'un couvercle (8), apte à permettre d'une part le remplissage dudit bac en déchets notamment organiques, et d'autre part sa vidange après compostage, ***caractérisé** :*
▪ en ce que l'axe de rotation dudit au moins un bac de compostage est décentré par rapport au centre de gravité rotationnel dudit bac, de telle sorte que par défaut, c'est-à-dire en l'absence de toute contrainte ou action extérieure, l'ouverture (7) du bac est positionnée dans une zone supérieure du bac ;
▪ et en ce que ledit au moins un bac de compostage est constitué par l'assemblage de deux demi-coques (9, 10) l'une avec l'autre, symétriques l'une de l'autre, chacune des demi-coques de forme globalement cylindrique étant elle-même constituée d'une paroi externe (12) et d'une paroi interne (11) réalisées en matière plastique.

2. Dispositif de compostage selon la revendication 1, ***caractérisé* en ce qu'**une lame d'air est ménagée entre la paroi externe (12) et la paroi interne (11) de chacune des demi-coques (9, 10).

3. Dispositif de compostage selon l'une des revendications 1 et 2, ***caractérisé* en ce que** la paroi externe (12) est réalisée en polypropylène injecté, avantageusement chargé en talc.

4. Dispositif de compostage selon l'une des revendications 1 à 3, ***caractérisé* en ce que** la paroi interne (11) est réalisée en polyéthylène haute densité expansé.

5. Dispositif de compostage selon l'une des revendications 1 à 3, ***caractérisé* en ce que** la paroi interne (11) est réalisée en polyuréthane ou en matière biosourcée mettant en œuvre comme matériau de base du chanvre, et dont la configuration est obtenue par matriçage.

6. Dispositif de compostage selon l'une des revendications 1 à 5, ***caractérisé* en ce que** chacune des demi-coques (9, 10) est réalisée par emboîtage de la paroi interne (11) dans la paroi externe (12), et **en ce que** ledit au moins un bac résulte du vissage desdites demi-coques l'une à l'autre.

7. Dispositif de compostage selon l'une des revendications 1 à 6, ***caractérisé* en ce que** la paroi interne (11) dépasse légèrement de la paroi externe au niveau de la zone de jonction future entre les deux demi-coques, de telle sorte à définir un rebord en saillie, d'une distance comprise entre 1 et 2 millimètres pour permettre, lors de l'assemblage des demi-coques ainsi constituées l'une avec l'autre, d'engendrer un écrasement dudit rebord en saillie apte à favoriser l'étanchéité alors du bac de compostage en résultant.

8. Dispositif de compostage selon l'une des revendications 1 à 7, ***caractérisé* en ce que** les parois respectivement externe (12) et interne (11), présentent, notamment en suite du moulage, un certain nombre de saillies radiales (13) dirigées en direction de l'intérieur du volume qu'elles définissent, et aptes à engendrer, lors de la rotation dudit bac de compostage autour de son axe, une optimisation du mélange des différents déchets au sein dudit bac, et ainsi favoriser le processus de compostage.

9. Dispositif de compostage selon l'une des revendications 1 à 8, ***caractérisé* en ce qu'**il comprend un piètement (3) muni d'une assise ou embase (4) pour son positionnement sur le sol, d'un socle vertical (5) solidaire de l'embase (4) et d'au moins un axe horizontal (6) sur lequel est susceptible d'être emmanché un bac de compostage conforme à l'invention, et constituant l'axe de rotation dudit bac.
